# EUROPEAN PATENT SPECIFICATION

(11) **EP 0 156 654 B1**
(45) Date of publication and mention of the grant of the patent: **24.02.1993**
(21) Application number: 85302233.3
(22) Date of filing: 29.03.1985
(51) Int. Cl.: H04L 5/14, H04L 12/00

(54) **Control method for a half-duplex data transmission system**
Steuerverfahren für ein halbduplexes Datenübertragungssystem
Procédure de commande pour un système de transmission de données en semi-duplex

(30) Priority: 29.03.1984 JP 59604/84
(43) Date of publication of application: 02.10.1985
(73) Proprietor: MITSUBISHI DENKI KABUSHIKI KAISHA, Tokyo 100 (JP)
(72) Inventor: Kamio, Masashi c/o Itami Works of Mitsubishi, City of Amagasaki Hyogo Prefecture (JP); Fukuda, Shiro c/o Itami Works of Mitsubishi, City of Amagasaki Hyogo Prefecture (JP); Murakami, Hidenobu c/o Itami Works of Mitsubishi, City of Amagasaki Hyogo Prefecture (JP)
(74) Representative: Lawson, David Glynne

(56) References cited:
- GB-A- 2 017 986
- US-A- 3 982 061
- US-A- 3 988 716
- PRACTICAL COMPUTING, vol. 5, no. 9, September 1982, pages 108-114, Southend-on-Sea, GB; A. CLEMENTS: "All together or one at a time: protocols for parallel and serial data ports"

## Description

This invention relates to data transmission apparatus wherein a data signal is output to another data transmitting station, while a data signal from the other data transmitting station is input.

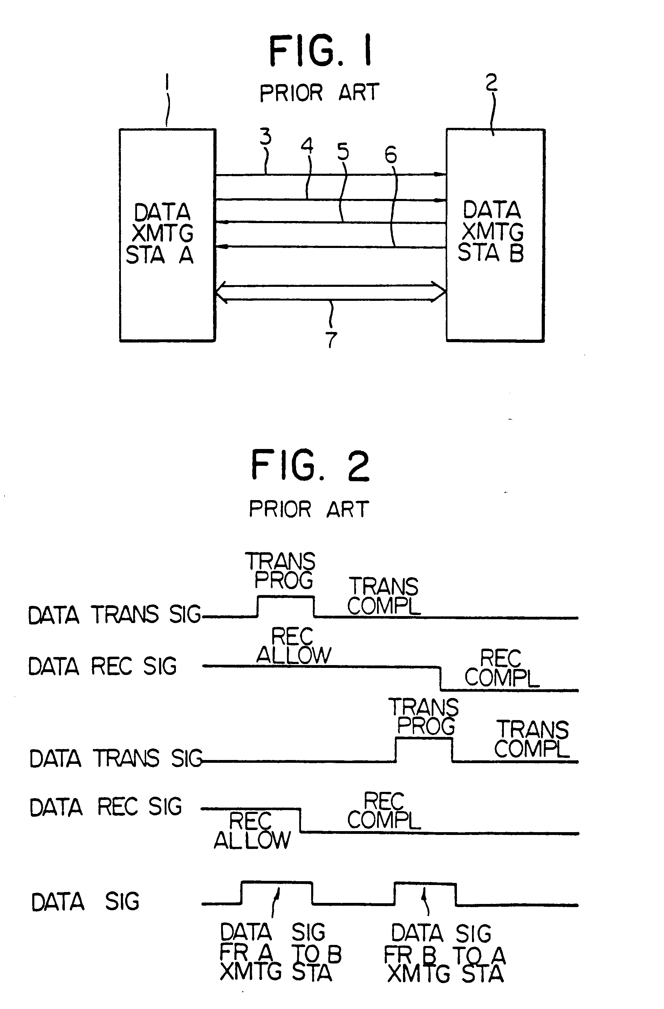

Heretofore, as a data transmission system employing a data transmission apparatus of this type, one shown in Fig. 1 has been known. Referring to Fig.1, numeral 1 designates a data transmitting station A, numeral 2 a data transmitting station B, and numeral 3 a data transfer signal. By way of example, this signal indicates that data transfer from the data transmitting station A to the data transmitting station B is progressing, when its signal level is an H (high) level, and it indicates the completion of the data transfer when the level is an L (low) level. Numeral 4 designates a data reception signal, the H level of which indicates that data transmission from the data transmitting station A to the data transmitting station B is allowed or possible and the L level of which indicates that data reception has been completed. Likewise, numeral 5 denotes a data transfer signal from the data transmitting station B to the data transmitting station A, and numeral 6 a data reception signal from the data transmitting station B to the data transmitting station A. Numeral 7 denotes data signals which are transferred and received in both the directions, and data can be exchanged between the data transmitting station A and the data transmitting station B.

Next, the operation of the prior-art apparatus shown in Fig. 1 will be explained with reference to a time chart in Fig. 2. The data transfer signal 3 which is output from the data transmitting station A indicates the status of transfer progression at the H level and the status of transfer completion at the L level as described before, and the data signal 7 is output from the data transmitting station A in only the transfer progression status. The data reception signal 6 which is output from the data transmitting station B indicates the allowance or possibility of reception at the H level and the completion of reception at the L level, and only when the data reception signal 6 from the data transmitting station B is at the H level and in the status of reception allowance, the data transmitting station A brings the data transfer signal 3 to the H level and falls into the status of transfer progression. Then, the data signal 7 is output from the data transmitting station A, and it is received by the data transmitting station B. When the data reception signal 6 which is output from the data transmitting station B has become the L level to complete the reception, the data transfer signal 3 which is output from the data transmitting station A is consequently brought to the L level to complete the transfer. Therefore, the data signal 7 is no longer output from the data transmitting station A.

The data reception signal 4 output from the data transmitting station A and the data transfer signal 5 output from the data transmitting station B operate similarly to eh data reception signal 6 and the data transfer signal 3, respectively. They are controlled by the corresponding data transmitting station A and B when the data signal 7 is output from the data transmitting station B to the data transmitting station A.

The prior-art apparatus which is constructed as shown in Fig. 1 and which is operated as illustrated in Fig. 2 has the disadvantage that the data transfer signals 3, 5 for signal transfer control and the data reception signals 4, 6 for signal reception control are required as data control signals, so two data control signals are needed per data transmitting station.

GB Patent Specification 2017986A relates to a computer interface with a bidirectional control line for effecting a dialogue between a central processor and a peripheral unit. The interface makes use of four statuses.

According to the present invention, there is provided data transmission apparatus wherein a data signal of a data transmitting station (A) is input to another data transmitting station (B), and a data signal from the other data transmitting station (B) is input to the first-mentioned data transmitting station (A), the data signals being transmitted via a bidirectional link, characterized in that: four statuses, viz. transfer progression, transfer completion, reception allowance, and reception completion of each said data signal, are established depending upon signal levels and input/output timings of a first single data control signal which is input to the said other data transmitting station (B) and a second single data control signal which is output from the said other data transmitting station (B), and each of the single data control signals is unidirectional, wherein the data signal is transmitted from the data transmitting station (A) to the data transmitting station (B) when the transfer progression status is indicated on the first single data control signal and the reception allowance status is indicated on the second single data control signal, the reception of the data signal by the station (B) is completed when the second single data control signal indicates the reception completion status whereupon the first single data control signal indicates the transfer completion status thereby stopping the output of the data signal, the data signal is transmitted from the data transmitting station (B) to the data transmission station (A) when the first single data control signal indicates the reception allowance status and the second single data control signal indicates the transfer progression status, whereby reversing the status indications on the respective single data control signals enables reversal of the direction the data signal is sent.

In the drawings:
Fig. 1 is a block diagram for explaining data transmission prior art apparatus;
Fig. 2 is a timing chart of input and output signals in the apparatus shown in Fig. 1;
Fig. 3 is a block diagram showing an embodiment of this invention;
Fig. 4 is a timing chart of input and output signals in the apparatus shown in Fig. 3; and
Figs. 5 and 6 are block diagrams showing other embodiments different from each other.

In the drawings, the same symbols designate identical or corresponding portions.

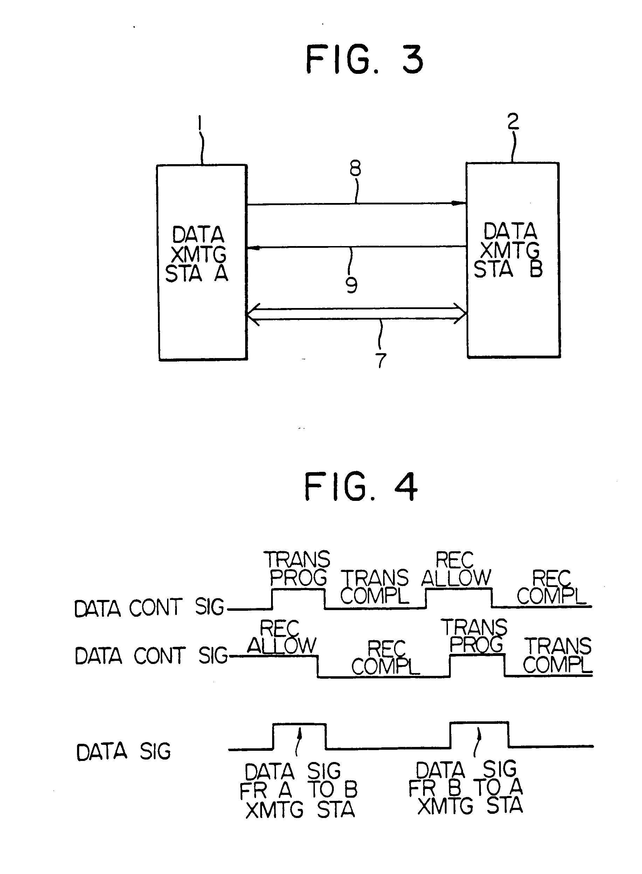

Now, one embodiment of this invention will be described with referance to the drawings. Referring to Fig. 3, numeral 1 designates a data transmitting station A, numeral 2 a data transmitting station B, and numeral 7 data signals, and these are the same as explained by the use of the identical symbols with reference to Fig. 1. Numeral 8 designates a first data control signal which is output from the data transmitting station A and is input to the data transmitting station B, while numeral 9 designates a second data control signal which is output from the data transmitting station B and is input to the data transmitting station A. The data signal 7 is controlled by the data control signals 8, 9, and it is output from either one of the data transmitting stations A and B and is input to the other. In addition, this data signal 7 is composed of a plurality of serial or parallel bits constituting a digital signal or the like.

Next, the operation of the apparatus illustrated in Fig. 3 will be described by referring also to a timing chart in Fig. 4. By way of example, the data control signal 8 which is output from the data transmitting station A indicates the status of reception completion with its L level, while the data control signal 9 from the data transmitting station B indicates the status of reception allowance with its H level. The data signal 7 is output from neither of the data transmitting stations A and B. The data control signal 8 output from the data transmitting station A changes from the L level to the H level, thereby to fall into the status of transfer progression. At the same time, the data signal 7 is output from the data transmitting station A and is input to the data transmitting station B. The data transmitting station B receives the data signal 7 when the data control signal 8 in the transfer progression status from the data transmitting station A is at the H level, and the reception is completed in response to the change, from the H level to the L level, of the data control signal 9 which is output by the data transmitting station B. When this data control signal 9 has changed from the H level to the L level into the reception completion status, the data control signal 8 output from the data transmitting station A changes from the H level to the L level into the transfer completion status, and the data signal 7 fails to be output. Thereafter, the data control signal 8 changes from the L level to the H level again, thereby to fall into the status of reception allowance. Thus, the data control signal 9 of the data transmitting station B changes from the L level to the H level into the status of transfer progression, and the data signal 7 is output to the data transmitting station A. Thenceforth, steps reverse to those of the foregoing output operation of the data signal 7 from the data transmitting station A to the data transmitting station B are repeated, and the data signal 7 can be sent in the opposite direction.

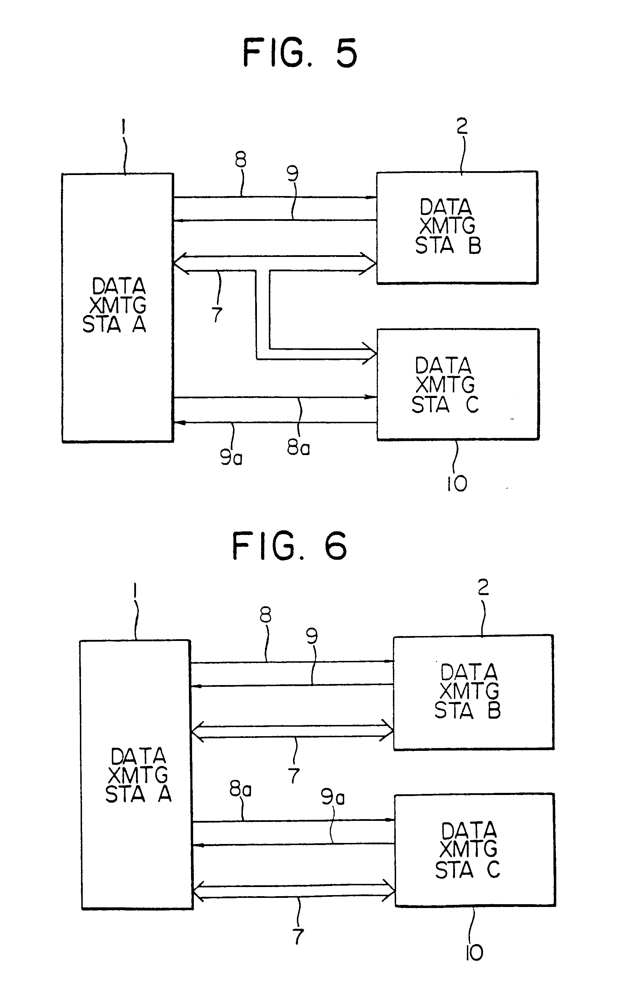

While the case of the arrangement of two data transmitting stations A and B has been illustrated in Figs. 3 and 4, this invention is also applicable to the case of three stations A, B, and C, arranged by adding the data transmitting station 10 as shown in Fig. 5 or Fig. 6. In this case, data control signals are required between the data transmitting stations A and B as represented by numerals 8 and 9 and between the data transmitting stations A and C as represented by symbols 8a and 9a. However, the data signals 7 may be made common as shown in Fig. 5 and can also be individually exchanged as shown in Fig. 6.

It is also possible to construct data transmission apparatus which copes with three or more data transmitting stations. In this case, the quantity of data of the data signals 7 to be sent in is determined beforehand, or which of transfer progression, transfer completion, reception allowance, or reception completion the data control signal 8, 9, 8a, or 9a to subsequently change indicates is altered at will, depending upon the content of the data signal 7 to be sent in, whereby the alternate exchange of the data signals 7 is changed.

As set forth above, according to this invention, data transmission apparatus wherein a data signal 7 is output to another data transmitting station B and wherein a data signal 7 from the other data transmitting station B is input is so constructed that four statuses:
transfer progression, transfer completion, reception allowance, and reception completion, of the data signal 7, are established depending upon signal levels and input/output timings of a single data control signal 8 which is output to the other data transmitting station B and a single data control signal 9 which is input from the other data transmitting station B. This brings forth the effect that the apparatus of the invention can reduce the number of data control signals as compared with the prior-art apparatus, and the apparatus can accordingly be lowered in cost.

## Claims

1. Data transmission apparatus wherein a data signal (7) of a data transmitting station (A) is input to another data transmitting station (B), and a data signal (7) from the other data transmitting station (B) is input to the first-mentioned data transmitting station (A), the data signals (7) being transmitted via a bidirectional link, characterized in that: four statuses, viz. transfer progression, transfer completion, reception allowance, and reception completion of each said data signal, are established depending upon signal levels and input/output timings of a first single data control signal (8) which is input to the said other data transmitting station (B) and a second single data control signal (9) which is output from the said other data transmitting station (B), and each of the single data control signals (8,9) is unidirectional, wherein the data signal (7) is transmitted from the data transmitting station (A) to the data transmitting station (B) when the transfer progression status is indicated on the first single data control signal (8) and the reception allowance status is indicated on the second single data control signal (9), the reception of the data signal (7) by the station (B) is completed when the second single data control signal (9) indicates the reception completion status whereupon the first single data control signal (8) indicates the transfer completion status thereby stopping the output of the data signal (7), the data signal (7) is transmitted from the data transmitting station (B) to the data transmission station (A) when the first single data control signal (8) indicates the reception allowance status and the second single data control signal (9) indicates the transfer progression status, whereby reversing the status indications on the respective single data control signals (8,9) enables reversal of the direction the data signal (7) is sent.

## Patentansprüche

1. Datenübertragungsvorrichtung, wobei ein Datensignal (7) einer Datenübertragungsstation (A) einer anderen Datenübertragungsstation (B) zugeführt wird und ein Datensignal (7) von der anderen Datenübertragungsstation (B) der zuerst genannten Datenübertragungsstation (A) zugeführt wird, wobei die Datensignale (7) auf einer bidirektionalen Verbindungsleitung übertragen werden,
dadurch gekennzeichnet,
daß vier Zustände, nämlich Übertragungsfortschritt, Übertragungsbeendigung, Empfangsgenehmigung und Empfangsbeendigung für jedes der Datensignale, in Abhängigkeit von Signalpegeln und Eingabe/Ausgabe-Zeitpunkten eines ersten einzelnen Datensteuersignals (8), das der anderen Datenübertragungsstation (B) zugeführt wird, und eines zweiten einzelnen Datensteuersignals (9), das von der anderen Datenübertragungsstation (B) abgegeben wird, geschaffen werden, und daß jedes der einzelnen Datensteuersignale (8, 9) unidirektional ist, wobei das Datensignal (7) von der Datenübertragungsstation (A) zu der Datenübertragungsstation (B) übertragen wird, wenn der Übertragungsfortschrittszustand mit dem ersten einzelnen Datensteuersignal (8) angezeigt wird und der Empfangsgenehmigungszustand mit dem zweiten einzelnen Datensteuersignal (9) angezeigt wird, der Empfang des Datensignals (7) durch die Station (B) beendet ist, wenn das zweite einzelne Datensteuersignal (9) den Empfangsbeendigungszustand anzeigt, woraufhin das erste einzelne Datensteuersignal (8) den Übertragungsbeendigungszustand anzeigt und dadurch die Abgabe des Datensignals (7) stoppt, das Datensignal (7) von der Datenübertragungsstation (B) zu der Datenübertragungsstation (A) übertragen wird, wenn das erste einzelne Datensteuersignal (8) den Empfangsgenehmigungszustand anzeigt und das zweite einzelne Datensteuersignal (9) den Übertragungsfortschrittszustand anzeigt, so daß eine Umkehrung der Zustandsanzeigen bei den jeweiligen einzelnen Datensteuersignalen (8, 9) die Umkehrung der Richtung ermöglicht, in die das Datensignal (7) gesendet wird.

## Revendications

1. Appareil de transmission de données dans lequel un signal de données (7) d'une station de transmission de données (A) est entré dans une autre station de transmission de données (B), et un signal de données (7) de l'autre station de transmission de données (B) est entré dans la station de transmission de données mentionnée en premier (A), les signaux de données (7) étant transmis via une liaison bidirectionnelle, caractérisé en ce que : quatre états, c'est-à-dire la progression de transfert, l'achèvement de transfert, la permission de réception et l'achèvement de réception de chacun desdits signaux de données sont établis en fonction des niveaux des signaux et des temps d'entrée/de sortie d'un premier signal de contrôle de données uniques (8) qui est entré dans ladite autre station de transmission de données (B) et d'un deuxième signal de contrôle de données uniques (9) qui est émis par ladite autre station de transmission de données (B), et chacun des signaux de contrôle de données uniques (8,9) est unidirectionnel, dans lequel un signal de données (7) est transmis de la station de transmission de données (A) à la station de transmission de données (B) lorsque l'état de progression de transfert est indiqué sur le premier signal de contrôle de données uniques (8) et l'état de permission de réception est indiqué sur le deuxième signal de contrôle de données uniques (9), la réception du signal de données (7) par la station (B) est achevée lorsque le deuxième signal de contrôle de données uniques (9) indique l'état d'achèvement de réception à la suite de quoi le premier signal de contrôle de données uniques (8) indique l'état d'achèvement de transfert en arrêtant ainsi la sortie du signal de données (7), le signal de données (7) est transmis de la station de transmission de données (B) à la station de transmission de données (A) lorsque le premier signal de contrôle de données uniques (8) indique l'état de permission de réception et que le deuxième signal de contrôle de données uniques (9) indique l'état de progression de transfert, par quoi l'inversion des indications d'état sur les signaux de contrôle de données uniques respectifs (8,9) permet l'inversion de la direction dans laquelle le signal de données (7) est envoyé.
